Europäisches Patentamt

(19) European Patent Office

Office européen des brevets

(11) Publication number: **0 189 278 B1**

(12) **EUROPEAN PATENT SPECIFICATION**

(45) Date of publication of patent specification: **28.08.91**

(51) Int. Cl.⁵: **A21D 2/26**, A21D 2/32, A21D 2/18, A21D 13/08, A23J 1/12

(21) Application number: **86300275.4**

(22) Date of filing: **16.01.86**

(54) **Confectionery premix of starch and vital gluten and starch-based confectioneries made therewith.**

(30) Priority: **23.01.85 JP 10654/85**

(43) Date of publication of application:
**30.07.86 Bulletin 86/31**

(45) Publication of the grant of the patent:
**28.08.91 Bulletin 91/35**

(84) Designated Contracting States:
**BE DE FR GB NL**

(56) References cited:
**EP-A- 0 029 478**
**EP-A- 0 109 244**
**EP-A- 0 134 658**
**US-A- 4 007 289**
**US-A- 4 305 971**

(73) Proprietor: **KYOWA HAKKO KOGYO CO., LTD.**
**6-1, Ohtemachi 1-chome**
**Chiyoda-ku Tokyo-to(JP)**

(72) Inventor: **Katoh, You**
**807-18 Ushiku, Ushiku-machi**
**Inashiki-gun Ibaraki-ken(JP)**
Inventor: **Ogino, Takehiko**
**2140, Mimura**
**Ishioka-shi Ibaraki-ken(JP)**
Inventor: **Totsuka, Naoko**
**c4-202, 2350, Oaza Shida Miho-mura**
**Inashiki-gun Ibaraki-ken(JP)**

(74) Representative: **Lambert, Hugh Richmond et al**
**D. YOUNG & CO. 10 Staple Inn**
**London, WC1V 7RD(GB)**

**Description**

The present invention relates to a premix containing starch and vital gluten and which is useful in the manufacture of high quality confectionery. The invention also extends to starch-based confectioneries containing or prepared from such a premix.

In general, confectioneries such as sponge cakes, steam bread, cake doughnuts and biscuits are made using flour as one of the main raw materials. The kind of flour used is usually cake flour, which has a low content of gluten and which has a low viscoelasticity when made into dough. Depending on the kind of confectionery involved, other ingredients such as sugar, table salt, fat and oil, and eggs are usually added.

In accordance with the present invention it has been found that high quality, starch-based confectioneries can be obtained using a premix containing (A) corn or potato starch and (B) vital gluten (hereinafter referred to as PL gluten) having a bound monoacyl glycerophospholipid content of at least 30 mol%, based on the total content of bound phospholipid, with the proviso that when the bound monoacyl glycerophospholipid content is less than 50 mol% the total content of bound phospholipid is at least 2% (W/W). It will thus be seen that the confectioneries provided in accordance with this invention are essentially starch-based and contain a vital gluten the bound monoacyl glycerophospholipid content of which is higher than in ordinary commercially available vital gluten.

A process for the production of such a gluten is described in detail in EP-A-0134658 to which reference should be made. Briefly, in accordance with that disclosure PL gluten is obtained by adding phospholipase A (hereinafter referred to as PL-A) to flour in the ratio of $10^2$ - $10^4$ units per 1 kg of flour, further adding water thereto and kneading mixture with water to remove starch and the like. PL gluten can also be obtained by treating a mixture of phospholipids, flour and PL-A containing an amount of phospholipid of from 0.1-10% based on the weight of the flour, in the same way as given above, or by converting phospholipid to a phospholipid having a high content of monoacyl glycerophospholipid with PL-A, and binding the resultant phospholipid to gluten protein in a PL gluten-producing process.

In the corn or potato starch based confectionery premixes of this invention the amount of PL gluten will usually be in the range 0.5 - 20 parts by weight per 100 parts of starch, and, in addition to the starch and PL gluten, confectionery premixes in accordance with this invention may, and usually will, contain one or more other conventional confectionery ingredients such as bread flour (hard flour), noodle flour (semi hard flour), and commercially available vital gluten, i.e. a conventional gluten having a much lower content of bound monoacyl glycerophospholipid, as well as sugar, table salt, fat, oil, skim milk, eggs, emulsifiers, flavours, etc.

By use of a premix according to this invention, starch-based confectioneries (sponge cake, steam bread, cake doughnuts, cookies, etc.) of good quality can be produced.

The present invention is illustrated by the following Examples wherein all numerical values refer to parts by weight unless otherwise indicated. In the test results, specific volume is measured by the rapeseed displacement method, whilst grain, texture, softness, appearance and colour were assessed by sensory evaluation.

Example 1

Butter Sponge Cake

Composition:

| Test Group No. | I (comparative) | II | III (comparative) |
|---|---|---|---|
| Cake flour | 100 | - | - |
| Corn starch | - | 92 | 92 |
| PL gluten (see Reference Example 1) | - | 8 | - |
| Commerically available gluten | - | - | 8 |
| Sugar | 100 | 100 | 100 |
| Whole egg | 140 | 140 | 140 |
| Table salt | 0.7 | 0.7 | 0.7 |
| Baking powder | 1 | 1 | 1 |
| High fructose corn syrup | 20 | 20 | 20 |
| Whipping agent containing fat | 15 | 15 | 15 |
| Rum | 4 | 4 | 4 |
| Vanilla | 0.4 | 0.4 | 0.4 |
| Water | 20 | 20 | 20 |

Production Process:

(1) The sugar, whole eggs, table salt, high fructose corn syrup, whipping agent containing fat, rum, vanilla oil and water were mixed at a low speed for 30 sec. in a vertical type mixer equipped with a beater.

(2) The cake flour, corn starch, PL gluten or commercially available gluten, and baking powder were sifted and mixed with the mixture obtained in (1). Mixing was carried out at a low speed for 2 min. and at a moderate speed for 1 min.

(3) The thus obtained batter was further mixed by using a continuous mixer under the following conditions:

| | |
|---|---|
| Pump | 70 rpm |
| Rotary speed | 200 rpm |
| Rotary pressure | 3 kg.cm$^2$ |
| Batter specific gravity | about 0.53 |
| Batter temperature | 23°C |

(4) The batter made in (3) above was finally placed into a cake pan and baked in an oven at 180°C.

The properties of the resultant sponge cake are shown in Table 1.

## Table 1

| Test group | Specific Volume | Properties Grain | Texture |
|---|---|---|---|
| I (comparative) | 3.64 | good | good |
| II | 3.62 | good | good |
| III (comparative) | 3.02 | poor | poor |

As is apparent from Table 1, the product in the test group II was of the same quality as the conventional flour-based sponge, test group I.

Example 2

Biscuits

Composition:

| Test Group No. | I(comp) | II(comp) | III(comp) | IV | V(comp) |
|---|---|---|---|---|---|
| Cake flour | 100 | - | - | - | - |
| Wheat starch | - | 92 | 92 | - | - |
| Potato starch | - | - | - | 92 | 92 |
| PL gluten (Ref. Example 1) | - | 8 | - | 8 | - |
| Commerically available gluten | - | - | 8 | - | 8 |
| Sugar | 65 | 65 | 65 | 65 | 65 |
| Whole egg | 15 | 15 | 15 | 15 | 15 |
| Shortening | 45 | 45 | 45 | 45 | 45 |
| Table salt | 1 | 1 | 1 | 1 | 1 |
| Dry milk | 3 | 3 | 3 | 3 | 3 |
| Sodium bicarbonate | 0.5 | 0.5 | 0.5 | 0.5 | 0.5 |
| Ammonium carbonate | 0.5 | 0.5 | 0.5 | 0.5 | 0.5 |
| Baking powder | 0.5 | 0.5 | 0.5 | 0.5 | 0.5 |
| Vanilla | a bit | a bit | a bit | a bit | a bit |

Production Process:

(1) The flour or starch, gluten, baking powder, sodium bicarbonate, ammonium carbonate, dry milk, table salt and vanilla were sifted and mixed to produce a first mixture (1).
(2) The shortening was put into a mixer and mixed using a beater at a speed for 30 sec. Sifted sugar was introduced into the mixer (2) in several installments followed by the whole eggs which were beaten and introduced likewise in several installments, to produce a second mixture (2).

(3) The mixture (1) was added to mixture (2) in several installments and well to obtain a homogenous dough (3).

(4) The dough (3) was refrigerated for solidification, formed into a cylindrical shape and cut with a wire-cutter. The cut pieces of dough were then placed on a baking sheet, and baked at about 190°C.

The properties of the resulting biscuits are shown in Table 2.

## Table 2

| Test group | Properties | | |
|---|---|---|---|
| | Appearance | Softness | Texture |
| I (comparative) | ordinary | ordinary | ordinary |
| II (comparative) | ordinary | good | good |
| III (comparative) | poor | poor | poor |
| IV | good | good | good |
| V (comparative) | poor | poor | poor |

As will be seen, using potato starch and PL gluten, (Test group IV) biscuits were obtained of good appearance, softness and texture.

## Example 3

### Cake Doughnut

Mix Composition:

| Test Group No. | I (comp) | II | III (comp) |
|---|---|---|---|
| Cake flour | 68 | - | - |
| Corn starch | - | 62.5 | 62.5 |
| PL gluten (Ref. Example 1) | - | 5.5 | - |
| Commercially available gluten | - | - | 5.5 |
| Sugar | 20 | 20 | 20 |
| Table salt | 1 | 1 | 1 |
| Shortening | 5 | 5 | 5 |
| Skim milk | 4 | 4 | 4 |
| Baking powder | 1.5 | 1.5 | 1.5 |
| Sodium bicarbonate | 0.5 | 0.5 | 0.5 |
| Total | 100 | 100 | 100 |

Dough Composition:

|  | Amount | Parts by weight |
|---|---|---|
| The above mix | 1500 g | 100 |
| Whole egg | 150 | 10 |
| Water | 525 | 35 |

Production Process:

(1) The powdered ingredients were first mixed, and the shortening was added. The mixture was uniformly blended.

(2) The mix (1) was then mixed with whole eggs and water in a mixer at a low speed for 40 sec. and at a moderate speed for 20 sec. at a mixing temperature of from 20 to 24°C and a floor time of 10 min.

(3) The resulting dough was deposited with a pressure depositor and fried at a temperature of from 180 to 185°C for about 2 min.

Properties of the resulting doughnuts are shown in Table 3.

## Table 3

| Test group | Volume | Properties | | |
|---|---|---|---|---|
|  |  | Balance of shape | Oil - absorption | Texture |
| I (comparative) | good | good | ordinary | ordinary |
| II | good | good | slightly raised | good |
| III (comparative) | poor | poor | high | poor |

As is apparent from Table 3, when corn starch and PL gluten were used (Test group II) instead of cake flour (Test group I), the degree of oil-absorption of the product was a little higher but the texture is better. Using corn starch and conventional gluten (Test group III) the result is generally poor.

Reference Example 1

The PL gluten used in the foregoing examples was obtained as follows:

to 400 ml of a 15% (w/w) aqueous dispersion of purified soybean lecithin (SLP-White, product of True Lecithin Co Ltd.) was added calcium chloride to a concentration of 20 mM. Further, 1200 mg (504 units) of PL-A was added thereto, and the mixture was allowed to react at pH 9.0 at 55°C for 2 hours to obtain a modified phospholipid dispersion wherein the content of monoacyl glycerophospholipid is 75 mol%. Then 100 ml of the modified phospholipid dispersion and 1000 g of commercially available vital gluten (Emasoft Ex-100, product of Riken Vitamin Co Ltd.) were mixed with stirring and the mixture was lyophilized and pulverized into a powdery gluten.

Further, to the powdery gluten was added 100 ml of the modified phospholipid dispersion, and mixed with stirring. The mixture was lyophilized and pulverised into a powdery gluten. The above-mentioned procedure where to the resultant powdery gluten was added 100 ml of the modified phospholipid dispersion and powdered through lyophilization was repeated further two times. Totally, 400 ml of the modified phospholipid was added. The bound phospholipid content of the vital gluten (PL-gluten) thus obtained was 3.5% (w/w) and the bound monacyl glycerophospholipid content was 68 mol%.

**Claims**

1. A vital gluten and starch-containing premix for use in the manufacture of a starch-based confectionery, characterised in that the premix contains, as essential components, a mixture of corn or potato starch and a vital gluten said vital gluten having a bound monoacyl glycerophospholipid content of at least 30 mol%, based on the total content of bound phospholipids, with the proviso that when said bound monoacyl glycerophospholipid content is less than 50 mol%, then the total content of bound phospholipids in the vital gluten is at least 2% (W/W).

2. A premix according to claim 1, characterised in that the mixture contains from 0.5 to 20 parts by weight of said vital gluten per 100 parts by weight of corn or potato starch.

3. A premix according to claim 1 or 2, containing, in addition to the corn or potato starch and vital gluten, one or more of the following: hard flour, semi-hard flour, sugar, salt, fat, oil, skim milk, eggs, emulsifier and flavouring.

4. A starch-based confectionery obtained by baking or otherwise cooking a premix according to any one of claims 1 to 3.

5. A starch-based confectionery according to claim 4, in the form of sponge cake, steam bread, doughnuts or biscuits.

**Revendications**

1. Mélange préalable contenant de l'amidon et du gluten élastique, destiné à être utilisé dans la fabrication de pâtisseries à base d'amidon, *caractérisé* en ce que le mélange préalable contient, comme composants essentiels, un mélange d'amidon de maïs ou de pomme de terre et un gluten élastique, ledit gluten élastique présentant une teneur en monoacyl-glycérophospholipides liés d'au moins 30% en moles, par rapport à la teneur totale en phospholipides liés, avec la condition que, quand ladite teneur en monoacyl-glycérophospholipides liés est inférieure à 50% en moles, la teneur totale du gluten élastique en phospholipides liés vaut au moins 2% en poids.

2. Mélange préalable conforme à la revendication 1, *caractérisé* en ce que le mélange contient de 0,5 à 20 parties en poids dudit gluten élastique pour 100 parties en poids d'amidon de maïs ou de pomme de terre.

3. Mélange préalable conforme à la revendication 1 ou 2, contenant, outre l'amidon de maïs ou de pomme de terre et le gluten élastique, un ou plusieurs des ingrédients suivants : farine de blé dur, farine de blé semi-dur, sucre, sel, matière grasse, huile, lait écrémé, oeufs, émulsifiant et arôme.

4. Pâtisserie à base d'amidon, obtenue par cuisson, au four ou autrement, d'un mélange préalable conforme à l'une quelconque des revendications 1 à 3.

5. Pâtisserie à base d'amidon conforme à la revendication 4, sous la forme de madeleines, de pain cuit à la vapeur, de beignets ou de biscuits.

**Patentansprüche**

1. Vormischung, die vitales Gluten und Stärke enthält, zur Verwendung bei der Herstellung von Konditorwaren auf Stärkebasis, **dadurch gekennzeichnet,** daß die Vormischung als wesentliche Komponenten ein Gemisch aus Mais- oder Kartoffelstärke und vitalem Gluten enthält, wobei das vitale Gluten einen Gehalt an gebundenen Monoacylglycerophospholipid von wenigstens 30 Mol-% bezogen auf den Gesamtgehalt an gebundenen Phospholipiden enthält, mit der Maßgabe, daß, der Gesamtgehalt an gebundenen Phospholipiden im vitalen Gluten wenigstens 2 % (G/G) beträgt wenn der Gehalt an gebundenem Monoacylglycerophospholipid geringer als 50 Mol-% ist.

2. Vormischung nach Anspruch 1, **dadurch gekennzeichnet,** daß das Gemisch 0,5 bis 20 Gew.-Teile vitales Gluten pro 100 Gew.-Teile Mais- oder Kartoffelstärke enthält.

3. Vormischung nach Anspruch 1 oder 2, die zusätzlich zu Mais- oder Kartoffelstärke und vitalem Gluten eine oder mehrere der Komponenten Hartweizen, Semihartweizen, Zucker, Salz, Fett, Öl, entrahmte Milch, Eier, Emulgiermittel oder Würzessenzen enthält.

4. Konditorwaren auf Stärkebasis, die durch Backen oder anderweitiges Kochen einer Vormischung nach einem der Ansprüche 1 bis 3 erhalten werden.

5. Konditorwaren auf Stärkebasis nach Anspruch 4 in Form von Biskuitkuchen, gedämpftem Brot, Krapfen oder Keksen.